# EUROPEAN PATENT APPLICATION

(11) **EP 3 866 235 A1**
(43) Date of publication of application: **18.08.2021**
(21) Application number: 20156516.5
(22) Date of filing: 11.02.2020
(51) Int. Cl.: H01M 8/04014, H01M 8/04701

(54) **ELECTRICAL GENERATING SYSTEM COMPRISING A FUEL CELL AND A THERMAL REGULATION SYSTEM**

(71) Applicant: AIRBUS OPERATIONS, 31060 Toulouse Cedex 9 (FR); Airbus Operations GmbH, 21129 Hamburg (DE)
(72) Inventor: HANCOCK, Kurtus, 21129 HAMBURG (DE); KLEWER, Guido, 21129 HAMBURG (DE); MUEHLTHALER, Georg, 21129 HAMBURG (DE)
(74) Representative: Cabinet Le Guen Maillet

(57) **Abstract**

The invention concerns an electrical generating system (212) comprising a fuel cell (114) with an anode (114a), a cathode (114b) and an electrical output, a dihydrogen tank (120) containing gaseous dihydrogen and fluidly connected to an inlet of the anode (114a), an air inlet (132) fluidly connected to an inlet of the cathode (114b), a thermal regulation system (200) which is used to regulate the temperature of the fuel cell (114) and which uses gaseous dihydrogen as coolant and which comprises a regulation inlet (202) through which the dihydrogen is introduced in the thermal regulation system (200) and a regulation outlet (204) through which the dihydrogen is extracted from the thermal regulation system (200), and a cooling system (250) connected between the regulation outlet (204) and the regulation inlet (202) to cool the dihydrogen extracted from the regulation outlet (204) before its injection at the regulation inlet (202).

Thanks to the use of gaseous dihydrogen as coolant, the weight of the electrical generating system is reduced compared to the solution of the prior art.

## Description

### TECHNICAL FIELD

The present invention concerns an electrical generating system comprising a fuel cell and a thermal regulation system to regulate the temperature of the gaseous dihydrogen used to cool the fuel cell, and an aircraft comprising such electrical generating system.

### TECHNICAL BACKGROUND

Fuel cell power systems are more and more used with electrical systems in order to supply electrical energy thereto. For instance, such electrical systems are electrical motors used for propulsion of aircrafts. Such electrical motors receive electrical energy generated by at least one fuel cell and transform the electrical energy into mechanical energy. The mechanical energy may then be used by propellers to provide propulsion to the aircraft.

Operation of fuel cell power systems generates heat losses. In order to constrain fuel cell power systems temperature within an admissible range for proper operation of the fuel cell power systems, a coolant circulates in a cooling circuit in order to refresh the fuel cell power systems. The coolant is generally a mix of glycol and water. The weight of the coolant contributes significantly to the weight of the propulsive system of the aircraft.

It is desirable to overcome the aforementioned drawbacks of the prior art. It is more particularly desirable to provide a solution that enables reducing weight of the coolant in the propulsion system.

### SUMMARY OF THE INVENTION

An object of the present invention is to provide an electrical generating system comprising a fuel cell and a thermal regulation system to regulate the temperature of the gaseous dihydrogen used to cool the fuel cell.

For this purpose, an electrical generating system is proposed, this electrical generating system comprising:
- a fuel cell with an anode, a cathode and an electrical output,
- a dihydrogen tank containing dihydrogen and fluidly connected to an inlet of the anode through a first pipe,
- an air inlet fluidly connected to an inlet of the cathode,
- a thermal regulation system which is used to regulate the temperature of the fuel cell and which uses gaseous dihydrogen as coolant and which comprises a regulation inlet through which the dihydrogen is introduced in the thermal regulation system and a regulation outlet through which the dihydrogen is extracted from the thermal regulation system, and
- a cooling system fluidly connected between the regulation outlet and the regulation inlet and arranged to cool the dihydrogen extracted from the regulation outlet before its injection at the regulation inlet through an outlet pipe.

Thanks to the use of gaseous dihydrogen as coolant, the weight of the electrical generating system is reduced compared to the solution of the prior art.

According to a first embodiment, the thermal regulation system comprises a cooling stage which is located in the fuel cell next to the anode and the cathode.

According to a second embodiment, the thermal regulation system comprises the anode in which circulates the dihydrogen flowing from the dihydrogen tank and the dihydrogen flowing from the cooling system, and wherein the regulation outlet is the outlet of the anode and the regulation inlet is the inlet of the anode.

Advantageously, the cooling system comprises a ram air system comprising a heat exchanger, an inlet pipe fluidly connected between the regulation outlet and an inlet of the heat exchanger, the outlet pipe fluidly connected between an outlet of the heat exchanger and the regulation inlet, a coolant tank filled with gaseous dihydrogen, a driving system arranged to enable circulation of the gaseous dihydrogen through the pipes, a bypass pipe fluidly connected between the inlet pipe and the outlet pipe and arranged to bypass the ram air system, a bypass valve arranged to control the flow of the gaseous dihydrogen through the bypass pipe, a temperature sensor arranged to measure the temperature of the gaseous dihydrogen at the regulation outlet, and a cooling controller controlling the bypass valve according to the temperature measured by the temperature sensor.

Advantageously, the electrical generating system comprises a sub heat exchanger installed at the output of the dihydrogen tank to exchange heat between the first pipe and the outlet pipe.

It is also proposed an aircraft comprising an electrical generating system according to one of the preceding embodiments, a propulsion system having a propeller and an electric motor, the output shaft of which drives the propeller in rotation, and electrical conductors extending between the electrical output of the fuel cell and the electric motor.

### BRIEF DESCRIPTION OF THE FIGURES

The characteristics of the invention will emerge more clearly from a reading of the following description of an example of embodiment, said description being produced with reference to the accompanying drawings, among which:
Fig. 1 is a front view of an aircraft according to the invention,
Fig. 2 is a schematic view of an electrical generating system according to a first embodiment of the invention,
Fig. 3 is a schematic view of an electrical generating system according to a second embodiment of the invention,
Fig. 4 is a schematic view of hardware architecture of a controller used for managing cooling in the electrical generating system,

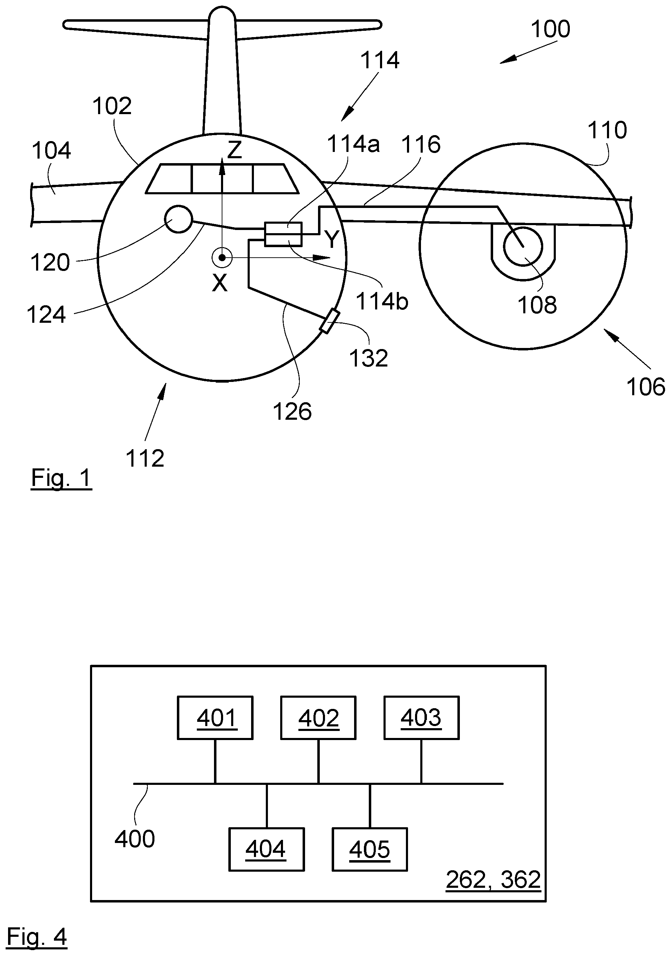

Fig. 4 schematically represents a state machine for managing cooling of the fuel cell power system in a particular embodiment of take-off conditions;
Fig. 5A schematically represents the fuel cell power system, in a second embodiment;
Fig. 5B schematically represents the fuel cell power system, in a third embodiment;
Fig. 6 schematically represents an algorithm for managing cooling of the fuel cell power system, in a particular embodiment; and
Fig. 7 schematically represents a state machine for managing cooling in take-off conditions, in another particular embodiment.

### DETAILED DESCRIPTION OF EMBODIMENTS

Fig. 1 represents an aircraft 100 comprising a fuselage 102 and two wings 104 disposed on each side of the fuselage 102. Under each wing 104, the aircraft 100 comprises at least one propulsion system 106.

Each propulsion system 106 has a propeller 110 and an electric motor 108, the output shaft of which drives the propeller 110 in rotation.

The aircraft 100 comprises also an electrical generating system 112 comprising a fuel cell 114 which produces electrical energy to power the electric motor 108 by electrical conductors 116 that extend between the electrical generating system 112 and the propulsion system 106 and more precisely between an electrical output of the fuel cell 114 and the electric motor 108.

A fuel cell is an electrochemical cell that converts the chemical energy of a fuel (here dihydrogen) and an oxidizing agent (here dioxygen of air) into electricity through a pair of redox reactions. At this end, the fuel cell 114 comprises an anode 114a and a cathode 114b. The electrical generating system 112 comprises a dihydrogen tank 120 containing gaseous dihydrogen or liquid dihydrogen with a gaseous phase and the inlet of the anode 114a is fluidly connected to the dihydrogen tank 120 through a first pipe 124 that supplies the anode 114a with dihydrogen.

The electrical generating system 112 comprises also an air inlet 132 which draws air from the atmosphere. Typically, the air inlet 132 is a scoop in the skin of the aircraft 100 and here the skin of the fuselage 102. The inlet of the cathode 114b is fluidly connected to the air inlet 132 through a second pipe 126 that supplies the cathode 114b with air.

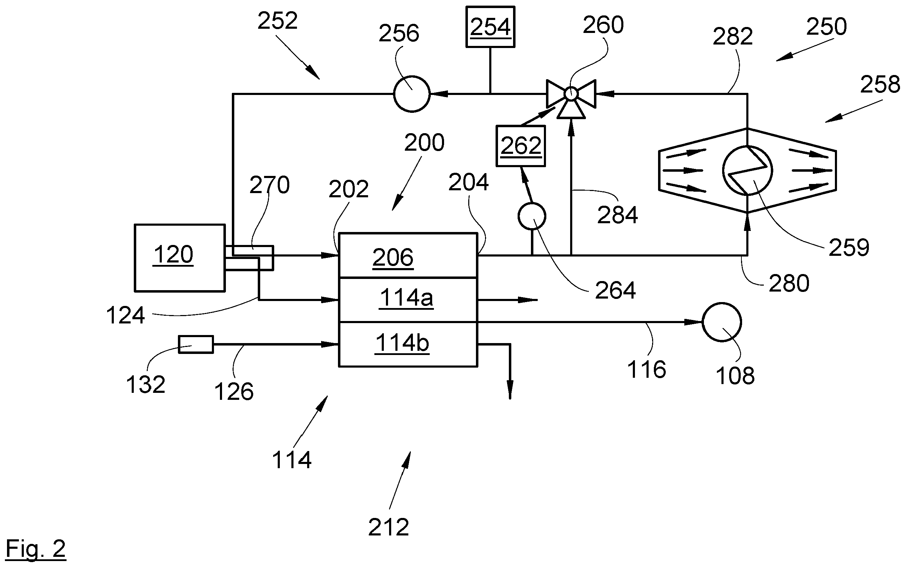

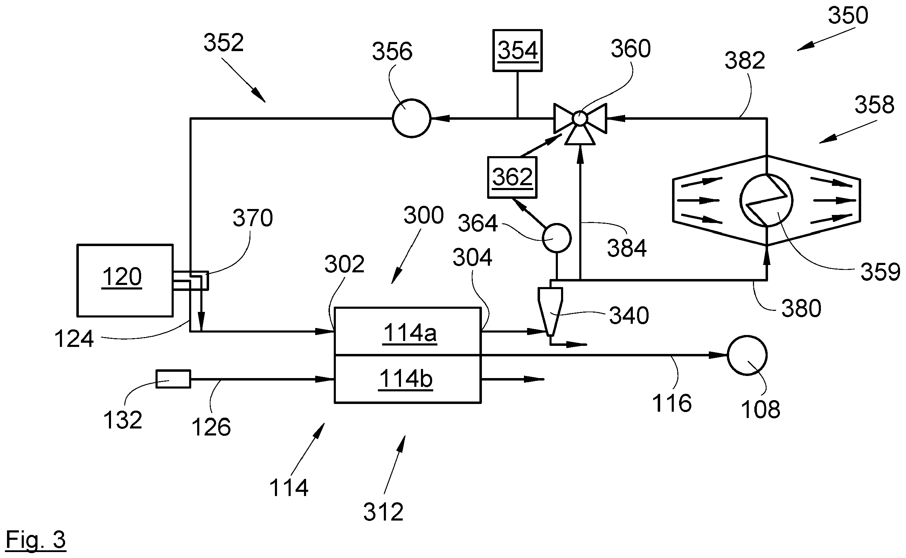

Fig. 2 shows an electrical generating system 212 according to a first embodiment of the invention, and Fig. 3 shows an electrical generating system 312 according to a second embodiment of the invention.

As described above, each electrical generating system 212, 312 comprises the fuel cell 114 with the anode 114a and the cathode 114b, the dihydrogen tank 120 and the air inlet 132 respectively fluidly connected to the inlet of the anode 114a and the inlet of the cathode 114b.

The electrical generating system 212, 312 comprises also a thermal regulation system 200, 300 which is used to regulate the temperature of the fuel cell 114 and which uses gaseous dihydrogen as coolant and which comprises a regulation inlet 202, 302 through which the dihydrogen is introduced in the thermal regulation system 200, 300 and a regulation outlet 204, 304 through which the dihydrogen is extracted from the thermal regulation system 200, 300.

The electrical generating system 212, 312 comprises also a cooling system 250, 350 fluidly connected between the regulation outlet 204, 304 and the regulation inlet 202, 302 and arranged to cool the dihydrogen extracted from the regulation outlet 204, 304 before its injection at the regulation inlet 202, 302 through an outlet pipe 282, 382.

The use of gaseous dihydrogen as coolant enables reducing weight of the electrical generating system 212, 312. In addition, the dihydrogen does not freeze at the considered temperatures, and it has a good thermal absorption.

In the embodiment of Fig. 2, the thermal regulation system 200 comprises a cooling stage 206 which is located in the fuel cell 114 next to the anode 114a and the cathode 114b. The dihydrogen used for the thermal regulation is independent from the dihydrogen used by the fuel cell 114.

In the embodiment of Fig. 3, the thermal regulation system 300 comprises the anode 114a in which circulates the dihydrogen flowing from the dihydrogen tank 120 and the dihydrogen flowing from the cooling system 350. The regulation outlet 304 is the outlet of the anode 114a and the regulation inlet 302 is the inlet of the anode 114a. The dihydrogen used for the thermal regulation is, for at least a part, the dihydrogen used by the fuel cell 114.

The cooling system 250, 350 comprises a cooling circuit 252, 352 between the regulation outlet 204, 304 and the regulation inlet 202, 302. The regulation outlet 204, 304 is the inlet of the cooling circuit 252, 352 and the regulation inlet 202, 302 is the outlet of the cooling circuit 252, 352.

The cooling system 250, 350 comprises a ram air system 258, 358 comprising a heat exchanger 259, 359 via which at least part of the dihydrogen heated up by the fuel cell 114 and extracted by the regulation outlet 204, 304 circulates. The ram air system comprises a pipe in which an exterior air flow circulates around the heat exchanger.

At this end, the cooling circuit 252, 352 comprises an inlet pipe 280, 380 fluidly connected between the regulation outlet 204, 304 and an inlet of the heat exchanger 259, 359, and the outlet pipe 282, 382 fluidly connected between an outlet of the heat exchanger 259, 359 and the regulation inlet 202, 302.

In the embodiment of Fig. 3, a water separator 340 is arranged on the inlet pipe 380 between the regulation outlet 304 and the inlet of the heat exchanger 359 to remove the water which is rejected by the anode 114a. In the same embodiment, the outlet pipe 382 and the first pipe 124 are fluidly connected upstream the regulation inlet 302. In this embodiment, the reduction of the weight and of the size of the electrical generating system 312 is increased. The cooling system 250, 350 comprises also a coolant tank 254, 354 and a driving system 256, 356 which is arranged to enable circulation of the gaseous dihydrogen through the cooling circuit 252, 352, i.e through the pipes. The driving system 256, 356 can be a fan or a compressor. The coolant tank 254, 354 and the driving system 256, 356 are arranged on the outlet pipe 282, 382. The coolant tank 254, 354 is filled with gaseous dihydrogen.

The cooling system 250, 350 comprises also a bypass pipe 284, 384 fluidly connected between the inlet pipe 280, 380 and the outlet pipe 282, 382 and arranged to bypass the ram air system 258, 358. The cooling system 250, 350 comprises also a bypass valve 260, 360 arranged to control the flow of the gaseous dihydrogen through the bypass pipe 284, 384. In the embodiment of Fig. 2 and Fig. 3, the bypass valve 260, 360 is arranged on the outlet pipe 282, 382.

Part of the dihydrogen heated up by the fuel cell 114 may be routed to the bypass valve 260, 360 thus bypassing the ram air system 258, 358. The bypass valve 260, 360 thus enables mixing hot dihydrogen, as heated up by the fuel cell 114, and refreshed dihydrogen, as output by the ram air system 258, 358. Control of the bypass valve 260, 360, namely of the part of dihydrogen that bypasses the ram air system 258, 358 and respectively of the part of dihydrogen that flows through the ram air system 258, 358, thus enables adapting temperature of the dihydrogen (re)injected in the thermal regulation system 200, 300, and consequently enables adapting temperature of the fuel cell 114.

Control of the bypass valve 260, 360 is performed by a cooling controller 262, 362 thanks to a temperature sensor 264, 364 installed on the cooling circuit 252, 352, preferably at the regulation outlet 204, 304. The temperature sensor 264, 364 measures temperature and provides information representative of the temperature of the dihydrogen to the cooling controller 262, 362. The cooling controller 262, 362 consequently adjusts operation of the bypass valve 260, 360 by using predefined rules and/or abacuses and/or look-up tables, as a function of the information provided by the temperature sensor 264, 364. The bypass valve 260, 360 is motorized. The cooling controller 262, 362 controls the position of the bypass valve 260, 360 by action on the motor of the bypass valve 260, 360 according to the temperature measured by the temperature sensor 264, 364 and a reference temperature to be reached by the dihydrogen.

An example of hardware architecture of the cooling controller 262, 362 is schematically illustrated in Fig. 4. According to the shown example of hardware architecture, the cooling controller 262, 362 comprises at least the following components interconnected by a communications bus 400: a processor, microprocessor, microcontroller or CPU (Central Processing Unit) 401; a RAM (Random-Access Memory) 402; a ROM (Read-Only Memory) 403 or a Flash memory; an HDD (Hard-Disk Drive) or an SD (Secure Digital) card reader 404, or any other device adapted to read information stored on non-transitory information storage medium; and at least one communication interface 405.

CPU 401 is capable of executing instructions loaded into RAM 402 from ROM 403 or from an external memory, such as an SD card via the SD card reader 404. After the cooling controller 262, 362 has been powered on, CPU 401 is capable of reading instructions from RAM 402 and executing these instructions. The instructions form one computer program that causes CPU 401 to perform some or all steps, algorithms and behaviors described herein with respect to the cooling controller 262, 362.

Consequently, it is understood that any and all steps, algorithms and behaviors described herein with respect to the cooling controller 262, 362 may be implemented in software form by execution of a set of instructions or computer program by a programmable computing machine, such as a DSP (Digital Signal Processor) or a microcontroller; or else implemented in hardware form by a machine or a dedicated chip or chipset, such as FPGA (Field-Programmable Gate Array) or an ASIC (Application-Specific Integrated Circuit). In general, the cooling controller 262, 362 comprises processing electronics circuitry adapted and configured for implementing the relevant steps, algorithms and behaviors described herein with respect to the cooling controller 262, 362.

According to a specific embodiment, a sub heat exchanger 270, 370 is installed at the output of the dihydrogen tank 120. This sub heat exchanger 270, 370 allows a heat exchange between the first pipe 124 and the outlet pipe 282, 382, it means between the dihydrogen flowing out from dihydrogen tank 120 and the dihydrogen used as coolant before it enters in the regulation inlet 202, 302. Thanks to this embodiment, in the sub heat exchanger 270, 370, the dihydrogen used as coolant is cooled and the dihydrogen flowing from the dihydrogen tank 120 is warmed up.

## Claims

1. Electrical generating system (112, 212, 312) comprising:
- a fuel cell (114) with an anode (114a), a cathode (114b) and an electrical output,
- a dihydrogen tank (120) containing dihydrogen and fluidly connected to an inlet of the anode (114a) through a first pipe (124),
- an air inlet (132) fluidly connected to an inlet of the cathode (114b),
- a thermal regulation system (200, 300) which is used to regulate the temperature of the fuel cell (114) and which uses gaseous dihydrogen as coolant and which comprises a regulation inlet (202, 302) through which the dihydrogen is introduced in the thermal regulation system (200, 300) and a regulation outlet (204, 304) through which the dihydrogen is extracted from the thermal regulation system (200, 300), and
- a cooling system (250, 350) fluidly connected between the regulation outlet (204, 304) and the regulation inlet (202, 302) and arranged to cool the dihydrogen extracted from the regulation outlet (204, 304) before its injection at the regulation inlet (202, 302) through an outlet pipe (282, 382).

2. Electrical generating system (212) according to claim 1, wherein the thermal regulation system (200) comprises a cooling stage (206) which is located in the fuel cell (114) next to the anode (114a) and the cathode (114b).

3. Electrical generating system (312) according to claim 1, wherein the thermal regulation system (300) comprises the anode (114a) in which circulates the dihydrogen flowing from the dihydrogen tank (120) and the dihydrogen flowing from the cooling system (350), and wherein the regulation outlet (304) is the outlet of the anode (114a) and the regulation inlet (302) is the inlet of the anode (114a).

4. Electrical generating system (212, 312) according to Claim 2 or Claim 3, wherein the cooling system (250, 350) comprises a ram air system (258, 358) comprising a heat exchanger (259, 359), an inlet pipe (280, 380) fluidly connected between the regulation outlet (204, 304) and an inlet of the heat exchanger (259, 359), the outlet pipe (282, 382) fluidly connected between an outlet of the heat exchanger (259, 359) and the regulation inlet (202, 302), a coolant tank (254, 354) filled with gaseous dihydrogen, a driving system (256, 356) arranged to enable circulation of the gaseous dihydrogen through the pipes, a bypass pipe (284, 384) fluidly connected between the inlet pipe (280, 380) and the outlet pipe (282, 382) and arranged to bypass the ram air heat system (258, 358), a bypass valve (260, 360) arranged to control the flow of the gaseous dihydrogen through the bypass pipe (284, 384), a temperature sensor (264, 364) arranged to measure the temperature of the gaseous dihydrogen at the regulation outlet (204, 304), and a cooling controller (262, 362) controlling the bypass valve (260, 360) according to the temperature measured by the temperature sensor (264, 364).

5. Electrical generating system (212, 312) according to any of Claims 1 to 4, wherein it comprises a sub heat exchanger (270, 370) installed at the output of the dihydrogen tank (120) to exchange heat between the first pipe (124) and the outlet pipe (282, 382).

6. Aircraft (100) comprising an electrical generating system (112, 212, 312) according to one of the preceding Claims, a propulsion system (106) having a propeller (110) and an electric motor (108), the output shaft of which drives the propeller (110) in rotation, and electrical conductors (116) extending between the electrical output of the fuel cell (114) and the electric motor (108).
